**Europäisches Patentamt**

**European Patent Office**

**Office européen des brevets**

(11) Veröffentlichungsnummer: **0 155 902**
**B1**

# (12) EUROPÄISCHE PATENTSCHRIFT

(45) Veröffentlichungstag der Patentschrift:
**11.05.88**

(21) Anmeldenummer: **85810010.0**

(22) Anmeldetag: **17.01.85**

(51) Int. Cl.⁴: **A 47 H 3/08**, A 47 H 5/032,
F 16 H 7/08

(54) **Zugvorrichtung für einen Vorhang.**

(30) Priorität: **09.02.84 CH 623/84**

(43) Veröffentlichungstag der Anmeldung:
**25.09.85 Patentblatt 85/39**

(45) Bekanntmachung des Hinweises auf die Patenterteilung:
**11.05.88 Patentblatt 88/19**

(84) Benannte Vertragsstaaten:
**AT BE CH DE FR GB IT LI LU NL SE**

(56) Entgegenhaltungen:
**GB - A - 991 543**
**US - A - 3 945 264**

**Die Akte enthält technische Angaben, die nach dem Eingang der Anmeldung eingereicht wurden und die nicht in dieser Patentschrift enthalten sind.**

(73) Patentinhaber: **K. Bratschi, Silent Gliss, Haldenweg 29, CH-3074 Muri (CH)**

(72) Erfinder: **Grützner, Hans, Stockackerstrasse 6, CH-3122 Kehrsatz (CH)**

(74) Vertreter: **Justitz-Wormser, Daisy P., Dipl.-Chem. et al, PATENTANWALTS-BUREAU ISLER AG Postfach 6940 Walchestrasse 23, CH-8023 Zürich (CH)**

ACTORUM AG

## Beschreibung

Die Erfindung betrifft eine Zugvorrichtung für einen Vorhang mit einem endlosen Zugorgan, das mit einem Rotationsantrieb und einer diesem gegenüberliegenden Umlenkvorrichtung in beiden Längsrichtungen verschiebbar ist.

Bei einer Belastung des Zugorgans erfährt dieses eine elastische Längenausdehnung. Die zusätzliche Mehrlänge des Zugorgans kann eine Bremsung oder ein Blockieren des Antriebes verursachen. Durch die schweizerische Patentschrift 420 520 ist eine Zugvorrichtung dieser Art bekanntgeworden, bei welcher ein Nachstecken des Zugorgans mit einem Verbindungsglied erreicht wird, das zwischen den Enden des Zugorgans angebracht ist und diese auf Zug kuppelt. Bekannt sind auch Seilspanner, die das Zugorgan unter Spannung halten und auch nachspannen. Weiter sind Zugvorrichtungen bekanntgeworden, bei denen die Antriebs- und/oder Umlenkrollen verschiebbar sind.

Diese Vorrichtungen vermögen grössere Längenausdehnungen des Zugorgans nicht mehr auszugleichen und müssen von Zeit zu Zeit nachgespannt werden. Nachteilig ist auch, dass die Zugspannung oft zu gross ist.

Die vorliegende Erfindung bezweckt nun, diese Nachteile zu beheben. Es stellt sich somit die Aufgabe, eine Zugvorrichtung der eingangs genannten Art zu schaffen, die auch bei grossen Längenausdehnungen des Zugorgans störungsfrei arbeitet und dennoch kostengünstig hergestellt werden kann.

Diese Aufgabe wird erfindungsgemäss durch die im Anspruch 1 gekennzeichnete Erfindung gelöst.

Besondere Ausführungsarten der Erfindung sind in den abhängigen Ansprüchen 2 bis 9 angegeben.

Diese Zugvorrichtung besitzt die besonderen Vorteile, dass ein Nachspannen nicht erforderlich ist und dass die Mehrlänge des Zugorgans fortlaufend aus dem Bereich zwischen Antriebs- und Umlenkrolle hinausgeführt wird.

Ausführungsbeispiele des Erfindungsgegenstandes werden nachfolgend anhand der Zeichnungen näher erläutert. Es zeigen:

Fig. 1 eine schematische Darstellung einer bekannten Zugvorrichtung,

Fig. 2 eine schematische Darstellung einer Zugvorrichtung nach einer ersten Variante,

Fig. 3 und Fig. 4 Querschnitte durch eine Zugvorrichtung nach einer zweiten Variante,

Fig. 5 eine Ansicht einer Zugvorrichtung nach der zweiten Variante, wobei zur besseren Sichtbarkeit Teile weggeschnitten sind,

Fig. 6 einen Querschnitt durch eine Zugvorrichtung nach einer dritten Variante,

Fig. 7 eine schematische Darstellung einer Schlingfederkupplung, und

Fig. 8 eine schematische Darstellung einer Freilaufkupplung mit Wälzkörper.

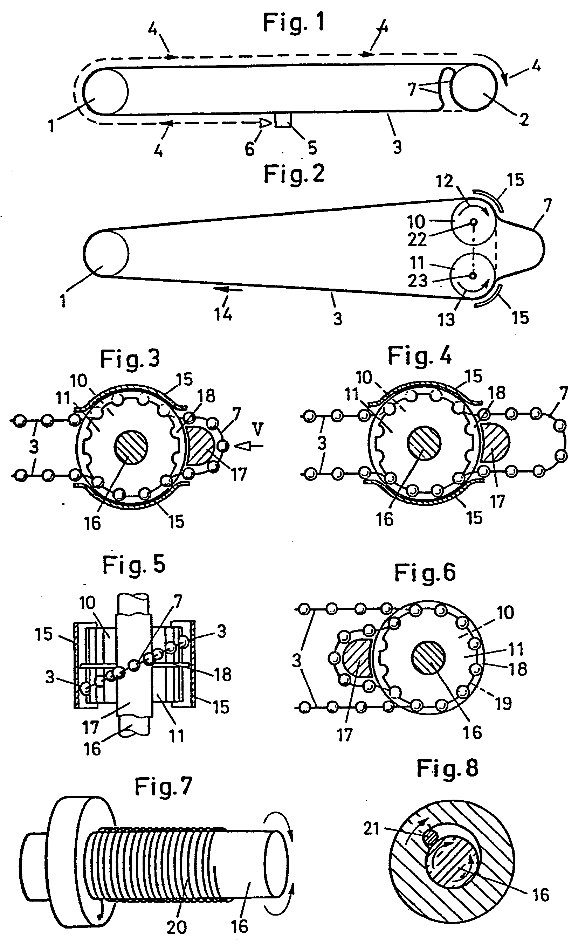

Die Fig. 1 zeigt eine bekannte Zugvorrichtung mit einem Umlenkrad 1 und einem im Abstand dazu angeordneten Antriebsrad 2, das ein Zugorgan 3, welches eine Kugelkette, konventionelle Kette (Velokette) oder Gliedkette, ein gelochtes Band oder ein Keilriemen oder Zahnriemen sein kann, in der Richtung der Pfeile 4 verschiebt. Durch die rücktreibende Kraft des schematisch dargestellten Vorhanges 5 in der Richtung des Pfeiles 6, dehnt sich das Zugorgan 3 und bildet eine Mehrlänge 7, die das Antriebsrad 2 umschlingt und dadurch blockiert. Mit der erfindungsgemässen Zugvorrichtung soll insbesondere eine solche Blockierung des Antriebes verhindert werden.

Die erfindungsgemässe Zugvorrichtung nach Fig. 2 besitzt ein Umlenkrad 1 und zwei nebeneinander mit je einer Antriebswelle 22 und 23 verbundene Antriebsräder 10 und 11. Die Antriebsräder 10 und 11 sind über Freilaufkupplungen mit den Antriebswellen 22 und 23 gekuppelt, und zwar so, dass in den Drehrichtungen der Pfeile 12 und 13 eine Mitnahme und in den anderen Drehrichtungen ein Freilauf erfolgt. Wird das Zugorgan 3 durch das antreibende Rad 10 in der Richtung des Pfeiles 14 verschoben, so dreht sich das zweite Rad 11 im Freilauf. Wird das Zugorgan 3 durch das Rad 11 in der Gegenrichtung des Pfeiles 14 verschoben, so bewegt sich das Rad 10 im Freilauf. Damit das Zugorgan 3 in Eingriff mit den Rädern 10 und 11 bleibt, sind im geeigneten Abstand zu den Rädern 10 und 11 in den Bereichen des Eingriffs des Zugorgans 3 Führungswände 15 angebracht. Die bei einer Dehnung des Zugorgans 3 entstehende Mehrlänge 7 wird aus dem Bereich zwischen Umlenk- und Antriebsrollen hinausgeführt.

In Fig. 3, 4 und 5 ist eine zweite Variante der erfindungsgemässen Zugvorrichtung dargestellt, die sich von der ersten Variante im wesentlichen dadurch unterscheidet, dass die Antriebsräder 10 und 11 übereinander und auf einer gemeinsamen Antriebswelle 16 angebracht sind. Das Zugorgan 3 ist hier eine Kugelkette, und die Antriebsräder 10 und 11 sind als Zahnräder ausgebildet. Damit die Mehrlänge 7 des Zugorgans 3 sich nicht in den Rädern 10 und 11 verklemmen kann, ist zwischen den Rädern 10 und 11 und der Mehrlänge 7 ein Ablenknocken 17 oder ein anderes geeignetes Element angebracht. Die Fig. 5 veranschaulicht den Übergang des Zugorgans 3 vom einen Rad 10 auf das andere Rad 11. Ein Flansch 18 zwischen den Rädern 10 und 11 gewährleistet, dass jeweils je eine Strangseite des Zugorgans 3 auf einem antreibenden Rad und einem freilaufenden Rad bleibt.

Die Fig. 6 zeigt ein Ausführungsbeispiel einer Zugvorrichtung, bei welcher das Zugorgan 3 die Antriebsräder 10 und 11 mit einer zusätzlichen Windung 19 umschlingt.

Die Fig. 7 und 8 zeigen Beispiele von Freilaufkupplungen, mit denen die Antriebsräder 10 und 11 mit den Antriebswellen 16 bzw. 22 und 23 gekuppelt sind. Die Fig. 7 zeigt eine an sich bekannte Schlingfederkupplung mit einer Feder 20, welche in der einen Drehrichtung von einer Welle mitgenommen und in der anderen Drehrichtung entkuppelt ist. Die Fig. 8 zeigt ein Reibrichtgesperre mit einem Wälzkörper 21, das hier ebenfalls als Freilaufkupplung verwendet werden kann.

## Patentansprüche

1. Zugvorrichtung für einen Vorhang, mit einem endlosen Zugorgan (3), das mit einem Rotationsantrieb und einer diesem gegenüberliegenden Umlenkvorrichtung (1) in beiden Längsrichtungen verschiebbar ist, dadurch gekennzeichnet, dass der Rotationsantrieb zwei Antriebsräder (10, 11) aufweist, die mit Freilauf mit wenigstens einer Antriebswelle (16; 22, 23) gekuppelt sind, dass das Zugorgan (3) von einem Antriebsrad (10, 11) auf das andere Antriebsrad (10, 11) wechselt, wobei das Zugorgan (3) mit beiden Antriebsrädern (10, 11) in Eingriff bleibt, dass der Freilauf des einen Antriebsrades (10, 11) in Zugrichtung betrachtet entgegengesetzt zum Freilauf des anderen Antriebsrades (10, 11) ist und dass Mittel (15; 18) oder Massnahmen vorgesehen sind, damit das Zugorgan (3) und die Antriebsräder (10, 11) in Eingriff bleiben.

2. Vorrichtung nach Anspruch 1, dadurch gekennzeichnet, dass beide Antriebsräder (10, 11) gemeinsam mit der Antriebswelle (16) gekuppelt sind.

3. Vorrichtung nach Anspruch 2, dadurch gekennzeichnet, dass das Zugorgan (3) zwischen zwei Eingriffsbereichen um einen zwischen den Antriebsrädern (10, 11) und dem Zugorgan (3) angeordneten Ablenknocken (17) geführt ist.

4. Vorrichtung nach einem der Ansprüche 1 bis 3, dadurch gekennzeichnet, dass als Massnahme, damit das Zugorgan (3) und die Antriebsräder (10, 11) in Eingriff bleiben, das Zugorgan (3) wenigstens eines der Antriebsräder (10, 11) umschlingt.

5. Vorrichtung nach Anspruch 2, dadurch gekennzeichnet, dass zwischen den beiden Antriebsrädern (10, 11) ein diese mindestens bereichsweise in radialer Richtung überragender Flansch (18) vorgesehen ist.

6. Vorrichtung nach einem der Ansprüche 1 bis 6, dadurch gekennzeichnet, dass die Kupplungen als Schlingfederkupplungen ausgebildet sind.

7. Vorrichtung nach einem der Ansprüche 1 bis 6, dadurch gekennzeichnet, dass in den Eingriffsbereichen des Zugorgans mit den Antriebsrädern (10, 11) als Mittel, damit das Zugorgan (3) und die Antriebsräder (10, 11) in Eingriff bleiben, Führungswände (15) für das Zugorgan vorgesehen sind.

8. Vorrichtung nach einem der Ansprüche 1 bis 7, dadurch gekennzeichnet, dass das Zugorgan (3) eine Kugelkette ist.

9. Vorrichtung nach einem der Ansprüche 1 bis 7, dadurch gekennzeichnet, dass das Zugorgan ein gelochtes Band ist.

## Claims

1. Drawing device for a curtain, with an endless drawing member (3), which is displaceable in both longitudinal directions with a rotational drive and a guide device (1) lying opposite thereto, characterized in that the rotational drive has two drive wheels (10, 11) which, with free-running, are coupled with at least one drive shaft (16; 22, 23), that the drawing member (3) changes from one drive wheel (10, 11) to the other drive wheel (10, 11), in which the drawing member (3) remains in engagement with the two drive wheels (10, 11), that the free-running of the one drive wheel (10, 11), viewed in the drawing direction, is opposed to the free-running of the other drive wheel (10, 11) and that means (15; 18) or measures are provided, so that the drawing member (3) and the drive wheels (10, 11) remain in engagement.

2. Device according to claim 1, characterized in that the two drive wheels (10, 11) are coupled jointly with the drive shaft (16).

3. Device according to claim 2, characterized in that the drawing member (3) is guided between two engagement regions about a deflection cam (17) which is arranged between the drive wheels (10, 11) and the drawing member (3).

4. Device according to one of claims 1 to 3, characterized in that as a measure so that the drawing member (3) and the drive wheels (10, 11) remain in engagement, the drawing member (3) loops around at least one of the drive wheels (10, 11).

5. Device according to claim 2, characterized in that between the two drive wheels (10, 11) a flange (18) is provided, which projects beyond the latter in radial direction at least in regions thereof.

6. Device according to one of claims 1 to 6, characterized in that the couplings are constructed as loop spring couplings.

7. Device according to one of claims 1 to 6, characterized in that in the engagement regions of the drawing member with the drive wheels (10, 11), as means so that the drawing member (3) and the drive wheels (10, 11) remain in engagement, guide walls (15) are provided for the drawing member.

8. Device according to one of claims 1 to 7, characterized in that the drawing member (3) is a ball chain.

9. Device according to one of claims 1 to 7, characterized in that the drawing member is a perforated belt.

## Revendications

1. Dispositif destiné au tirage d'un rideau et comprenant un organe de tirage sans fin (3) déplaçable dans les deux sens longitudinaux par une commande de rotation et un mécanisme de renvoi (1) opposé à celle-ci, caractérisé en ce que la commande de rotation se compose de deux galets de commande (10, 11) accouplés, tout en tournant librement, au moins à un axe d'entraînement (16; 22, 23); en ce que l'organe de tirage (3) passe d'un galet de commande (10, 11) à l'autre galet de commande (10, 11), l'organe de tirage (3) restant en prise avec les deux galets de commande (10, 11); en ce que la rotation libre de l'un des galets de commande (10, 11), considérée dans le sens du tirage, est opposée à la rotation libre de l'autre galet de commande (10, 11); et en ce qu'on a prévu des moyens (15; 18) ou des mesures pour que l'organe de tirage (3) et les galets de commande (10, 11) restent en prise.

2. Dispositif selon la revendication 1, caractérisé en ce que les deux galets de commande (10, 11) sont accouplés en commun à l'axe d'entraînement (16).

3. Dispositif selon la revendication 2, caractérisé en ce que l'organe de tirage (3) est guidé, entre deux zones actives, autour d'une came de déviation (17) disposée entre les roues de commande (10, 11) et l'organe de traction ou de tirage (3).

4. Dispositif selon l'une quelconque des revendications 1 à 3, caractérisé en ce que, comme mesure à prendre pour que l'organe de tirage (3) et les galets de commande (10, 11) restent en prise, l'organe de tirage (3) s'enroule au moins autour de l'un des galets de commande (10, 11).

5. Dispositif selon la revendication 2, caractérisé en ce qu'on a prévu, entre les deux galets de commande (10, 11) une bride (18) dépassant ceux-ci dans le sens radial au moins dans un certain domaine.

6. Dispositif selon l'une quelconque des revendications 1 à 5, caractérisé en ce que les accouplements sont réalisés comme des accouplements par ressort enroulé.

7. Dispositif selon l'une quelconque des revendications 1 à 6, caractérisé en ce que des parois de guidage (15) sont prévues pour l'organe de tirage (3) dans les zones de prise de ce dernier avec les galets de commande (10, 11) et ce, comme moyens pour que ledit organe de tirage (3) reste en prise avec les galets de commande (10, 11).

8. Dispositif selon l'une quelconque des revendications 1 à 7, caractérisé en ce que l'organe de tirage (3) est une chaîne à billes..

9. Dispositif selon l'une quelconque des revendications 1 à 7, caractérisé en ce que l'organe de tirage est une bande perforée.

Fig. 1

Fig. 2

Fig. 3

Fig. 4

Fig. 5

Fig. 6

Fig. 7

Fig. 8